# EUROPÄISCHE PATENTSCHRIFT

(11) **EP 2 448 845 B1**
(45) Veröffentlichungstag und Bekanntmachung des Hinweises auf die Patenterteilung: **04.09.2013**
(21) Anmeldenummer: 10717631.5
(22) Anmeldetag: 29.04.2010
(51) Int. Cl.: B65G 15/14, B65G 15/44, B65G 21/20

(54) **VORRICHTUNG ZUM TRANSPORTIEREN VON BEHÄLTERN**
APPARATUS FOR CONVEYING CONTAINERS
DISPOSITIF POUR TRANSPORTER DES RECIPIENTS

(30) Priorität: 29.06.2009 DE 102009027280
(43) Veröffentlichungstag der Anmeldung: 09.05.2012
(73) Patentinhaber: Robert Bosch GmbH, 70442 Stuttgart (DE)
(72) Erfinder: BAECHLE, Andreas, 79736 Rickenbach (DE)
(86) Internationale Anmeldenummer: PCT/EP2010/055776
(87) Internationale Veröffentlichungsnummer: WO 2011/000590

(56) Entgegenhaltungen:
- EP-A1- 1 447 357
- EP-A2- 1 795 465
- DE-C2- 3 016 940
- DE-U1- 29 617 281
- DE-U1- 29 813 546
- US-A- 5 137 099
- US-A- 5 775 068

## Beschreibung

### TECHNISCHES GEBIET

Die vorliegende Erfindung betrifft eine Vorrichtung zum Transportieren von Behältern nach dem Oberbegriff des Anspruchs 1.

### STAND DER TECHNIK

Behälter oder Trays werden üblicherweise mit Hilfe von Bändern, Riemen oder Ketten durch Verpackungsanlagen transportiert. Dabei können Bänder flexibel verschiedene Behälterformen durch Kraftschluss transportieren, während Ketten durch Formschluss eine genaue Kontrolle und Positionierung der Behälter sicherstellen.

Zu beachten ist, dass die Behälter im leeren Zustand meist sehr leicht sind und aus dünnem, leicht verformbarem Material bestehen, sodass nur geringe Kräfte auf die Behälter ausgeübt werden können. Ebenfalls ist das Behältermaterial meist sehr glatt, so dass nur eine geringe Haftreibung genutzt werden kann.

Problematisch bei Bändern ist, dass sich die meistens sehr leichten Trays leicht verschieben können. Dies passiert oft beim Beladen der Trays mit einem Produkt, so dass die aktuelle Position jedes Trays nach jedem Beladevorgang beispielsweise mittels eines Vision-Systems neu erfasst werden muss. Trays können sich aber auch jederzeit vollkommen unerwartet durch z.B. einen Luftzug, Vibrationen etc. verschieben. Zudem kann mit einem Band kein geneigter Behältertransport, wie er z.B. zum Erstellen von Packungen mit schmalen, nebeneinander stehenden Produkten (on-edge-Packstil) notwendig ist, realisiert werden, da die Trays hier wegen der geringen Reibung zwischen Tray und Band durch die Schwerkraft vom Band rutschen würden.

Mit Hilfe einer Kette, welche die Behälter im Formschluss transportiert, lassen sich die vorstehend genannten Probleme vermeiden. Allerdings besitzt die Kette eine starre Teihmg, so dass ein Wechsel auf eine andere Behältergrösse nur nach aufwendigen Umstell- oder Umbauarbeiten möglich ist. Unregelmässig geformte Trays lassen sich meist überhaupt nicht direkt in eine Kette einsetzen, sondern erfordern ein speziell angepasstes Adapter (Träger-) Stück, welches ebenfalls für jede Behältergrösse angepasst werden muss. Der komplexe mechanische Aufbau mit vielen Ecken und Fugen neigt zur Verschmutzung und ist problematisch bei Anwendungen, bei denen eine vollständige und häufige Reinigung notwendig ist, um eine Kontamination der Produkte, z.B. mit Keimen, zu vermeiden. Ketten können zur Erhöhung der Flexibilität mit absenkbaren Mitnehmern ausgestattet sein, was Kosten, Komplexität sowie die genannten Nachteile jedoch weiter erhöht.

Es gibt Ansätze, die Probleme von Bändern durch eine Erhöhung der Haftung, z.B. durch den Einsatz eines Vakuumbandes, zu umgehen. Dies ist aber bei Pick und Place Verpackungsanlagen, welche viele Meter Transportstrecke beinhalten, wegen des grossen Vakuumbedarfs unwirtschaftlich.

Weiterhin besitzen nicht alle Behälter eine durchgängige Auflagefläche, was zu erheblichen Verlusten beim Vakuum führt.

Der Einsatz von Vakuumbändern zum Halten der Behälter ist mit hohen Kosten zur Aufrecherhaltung eines ausreichenden Vakuums, mit einer hohen Lärmentwicklung und mit erheblichen Energiekosten verbunden. Zur Einhaltung von Hygienevorschriften erfordert der Einsatz von Vakuumbänder zudem einen erhöhten Reinigungsaufwand mit entsprechenden Zusatzkosten.

Ebenfalls mechanisch sehr aufwändig und auch in der Geschwindigkeit begrenzt sind alternative Transportsysteme, wie z.B. "Walking-Beam" Systeme, bei denen die Behälter schrittweise durch sich anhebende und absenkende Balken transportiert werden. Derartige Systeme sind oft ebenfalls mit Vakuum ausgestattet, um die Behälter sicher zu führen.

Die DE 30 16 990 zeigt eine Vorrichtung zum Ausrichten aufrechtstehenden Gefässe mit unrundem Querschnitt.

Ein weiteres Transportprinzip ist z.B. das BOSCH Rexroth Varioflow System. Hier werden Behälter so stark geklemmt, dass sie gegen die Schwerkraft gehalten werden. Die Klemmelemente werden bewegt und der geklemmte Behälter so transportiert. Hier lassen sich nur sehr stabile Behälter bewegen, da hohe Klemmkräfte erforderlich sind. Die gesamte Transportarbeit wird von den bewegten Klemmelementen geleistet. Für den Transport der dünnen, leicht verformbaren Trays, wie sie typisch in Verpackungsanlagen eingesetzt werden, ist dieses Prinzip nicht anwendbar.

### DARSTELLUNG DER ERFINDUNG

Der Erfindung liegt die Aufgabe zugrunde, ein Transportsystem für Behälter, insbesondere für Trays und Schachteln, für eine Verpackungsanlage bereitzustellen, welches die Flexibilität eines Bandsystems mit der hohen Sicherheit eines Kettentransportes vereint. Insbesondere soll ein Verrutschen der Behälter ausgeschlossen werden, so dass eine einmal ermittelte Position eines Behälters relativ zum Transportsystem während des gesamten Durchlaufs durch die Verpackungsanlage erhalten bleibt. Zudem soll das Transportsystems auch bei Applikationen, welche bezüglich einer Transportrichtung schräggestellte Behälter erfordern, einsetzbar sein. Das System soll leicht zu reinigen und kostengünstig in der Herstellung sein.

Zur erfindungsgemässen Lösung der Aufgabe führt eine Vorrichtung mit den Merkmalen des Anspruchs 1.

Die erforderliche hohe Flexibilität bedingt eine Fördereinrichtung, welche die Behälter im Wesentlichen durch Kraftschluss transportiert. Da die Behälter im beladenen Zustand im Vergleich zu ihrer Eigensteifigkeit sehr schwer sind, kann es notwendig sein, diese auf der vollen Behälterfläche zu tragen. Daher wird bevorzugt ein Transportband eingesetzt, auf dem der Behälter mit seiner ganzen Bodenfläche aufliegt. Ein derartiges Transportband bietet hohe Flexibilität und gute Abstützung und weist zudem gute Reinigungseigenschaften auf.

Die Fixierung der Behälter erfolgt durch eine zusätzliche, seitliche Klemmung. Da diese nur das Verrutschen der Behälter verhindern und den Behälter nicht tragen muss, kann diese Klemmung sehr viel schwächer sein als beispielsweise bei dem Rexroth Varioflow System. Durch die Klemmung wird erreicht, dass sich die relative Position der Behälter zum Transportband während dem Transport nicht mehr verändert.

Für eine Klemmung sind zwei gegenüberliegende, mitlaufende Klemmelemente erforderlich. Diese müssen sich beide exakt gleich schnell -- in der Regel mit der Geschwindigkeit des Transportbandes - bewegen, so dass auch bei langen Transportstrecken die Behälter sich nicht zu drehen beginnen. Falls ein Drehen der Behälter gewünscht ist kann dies durch eine gezielte Veränderung der Geschwindigkeiten der Klemmelemente erreicht werden.

Bevorzugt stehen die den seitlichen Transportführungen zugeordneten Klemmelemente einander gegenüber, und die Klemmelemente sind als seitliche Fühnmgselemente ausgebildet.

Eine der seitlichen Transportführungen ist mit der bandförmigen Behälterauflage verbunden. Die Klemmelemente der seitlichen Transportführung können in der Form von Nocken starr mit der bandförmigen Behälterauflage verbunden sein.

Wenigstens eine der seitlichen Transportführungen ist bevorzugt einzeln antreibbar.

Wenigstens eine der seitlichen Transportführungen ist bevorzugt mit flexiblen, elastischen Klemmelementen ausgestattet.

Die flexiblen Klemmelemente sind bevorzugt so an den Behälter angepasst, dass sie den Behälter zuverlässig, aber mit möglichst geringer Kraft, durch Klemmung fixieren. Zudem darf der Behälter nicht von der Behälterauflage abgehoben werden, was bedeutet, dass die Einleitung der Klemmkraft bevorzugt horizontal bzw. in einer zur Auflageebene parallelen Klemmebene erfolgen muss. Hierzu werden im Bedarfsfall auf jeden Behältertyp angepasste, sehr elastische und gegebenenfalls leicht auswechselbare Klemmelemente benötigt.

Wenigstens eine der Transportführungen kann zum Andrücken der Behälter gegen die Behälterauflage gegenüber der Transportebene geneigt, d.h. in Transportrichtung leicht abfallend, angeordnet sein. Damit würde am Behälter ständig ein Schlupf der Klemmelemente nach unten entstehen, wodurch die Behälter gegen die Behälterauflage gedrückt werden.

Das zur Fixierung erforderliche zweite Klemmelement kann, da es nicht elastisch sein muss, in der Regel für alle Behältertypen eingesetzt werden.

Die mit elastischen Klemmelementen ausgestattete, seitliche Transportführung kann quer zur Transportrichtung seitlich verschiebbar sein. Durch Veränderung des Abstands der Führungselemente -- z.B. durch verschiebbare Anordnung der elastischen Transportführung bzw. des elastischen Klemmelementes -- kann das System einfach auf unterschiedliche Behälterbreiten angepasst werden kann.

Die mit elastischen Klemmelementen ausgestattete, seitliche Transportführung kann als Schlaufenband ausgeführt sein.

Die elastischen Klemmelemente können als Lippen ausgeführt sein.

Die elastischen Klemmelemente können auch als beschichtete Zahnriemen ausgeführt sein, beispielsweise Zahnriemen mit Supergrip® Beschichtung. Auch bearbeitete Beschichtungen wie z.B. Linaplus® sind denkbar. In die Beschichtung können z.B. senkrechte Spitzen als nachgiebige Elemente eingebracht werden.

Das elastischen Klemmelemente können als einzelne "Kunststofffedern" auf einem Transportelement ausgeführt sein.

Zum Ausrichten der Behälter kann wenigstens eine der Transportführungen auf einer Einlaufstrecke in spitzem Winkel zur anderen Transportführung verlaufen. Am Ende der Einlaufstrecke kann wenigstens ein in die Transportebene einschwenkbarer Stopper als Anschlag für die Behälter vorgesehen sein.

Die Klemmelemente werden, um Kosten und Platz zu sparen, mit Vorteil nur auf einer Behälterseite elastisch ausgeführt. Auf der anderen Seite wird ein starrer Anschlag eingeführt. Dieser Anschlag bietet den Vorteil einer geraden Anschlagfläche, die eine exakte Positionsbestimmung der Behälter ermöglicht. Dieser kann am einfachsten mit derselben Geschwindigkeit wie das Bandsystem bewegt werden, in dem er direkt am Bandsystem befestigt wird. Um die Umlenkung um die Bandrollen zu ermöglichen, kann der Anschlag senkrecht eingeschnitten sein oder er besteht aus gänzlich unabhängigen Segmenten, die so schmal sind, dass sie sich um den Umlenkradius des Bandes führen lassen. Geeignet sind hier z.B. auf das Band aufgeschweisste Nocken, wie sie im Normalfall als Mitnehmer genutzt werden.

Das Transportband und die elastischen Seitenführungen werden mit der exakt gleichen Geschwindigkeit betrieben, um ein Verdrehen der Behälter zu vermeiden. Hierzu kann beispielsweise die Geschwindigkeit des Transportbandes z.B. mittels eines Encoders als Mastergeschwindigkeit erfasst werden. Dieses Geschwindigkeitssignal steuert sodann den Antrieb der Seitenführung, was schlupffrei erfolgen muss.

Das elastische Element muss so gewählt werden das es eine zuverlässige Klemmkraft auf den Behälter ausübt, ohne diesen duch eine ungünstige Kraftrichtung beispielsweise anzuheben oder aufgrund einer zu grossen Klemmkraft zu deformieren. Da die Behälter aus dünnem, vergleichsweise instabilen Kunststoff oder Karton bestehen, ist eine hohe Nachgiebigkeit erforderlich, um die Klemmkraft z.B. auch bei Toleranzen in der Behälterbreite oder leicht unterschiedlicher Orientierung bei der Klemmung ohne unzulässig hohe Schwankungen sicherzustellen. Zudem muss das elastische Element derart ausgeführt sein das es sich über Rollen umlenken lässt. Dies erfordert zunächst den jeweiligen Behältnissen angepasste elastische Elemente.

Es hat sich gezeigt, dass ein Schlaufenstollenprofil besonders gut eine Vielzahl unterschiedlicher Behälter zu klemmen vermag. Diese sehr elastischen Bänder werden üblicherweise als schonendes Transportband für Obst eingesetzt, um ein Rollen der Produkte auf dem Band zu verhindern.

Für einen sicheren Transport muss das Schlaufenstollenprofil so gewählt sein, das mindestens drei Schlaufen den Behälter klemmen.

Alternativ kann ein elastisches Klemmelement, unter Ausnutzung der Biegeschwäche eines schräggestellten Elements verwendet werden. Der ideale Winkel zwischen Klemmelement und einer Vertikalen zum Transportband liegt bevorzugt bei 15-20° Bei diesem Winkel ist neben optimaler Zugänglichkeit von oben auch eine ideale Kraftrichtung gewährleistet.

Dieses Klemmelement kann als Band z.B. kostengünstig so hergestellt werden, dass auf einen auf einen Zahnriemen als Grundelement aufgebrachten Keil ein Gurtband als federnde Lippe befestigt wird.

Alternativ besteht hier die Möglichkeit die Lippe gerade auf den Zahnriemen aufzubringen und eine eventuell erforderliche Schrägstellung durch eine Verdrehung des Zahnriemens beim Transport zu erhalten.

Weiterhin sind Beschichtungen als elastische Elemente denkbar. Dies bietet Kostenvorteile, da viele Beschichtungen standardmässig lieferbar sind (z.B. Supergrip®). Denkbar ist auch eine Bearbeitung eines weichen Beschichtungsmaterials z.B. als labile Prismen. Diese Form bietet eine Art Selbstreinigungseffekt in den Umlenkungen sowie kleine Umlenkradien.

Bei der Wahl des elastischen Elementes gilt:
- Für labile Behälter und Behälter mit grossen Anlageflächen quer zur Bewegungsrichtung wird Schlaufenband bevorzugt. Schlaufen haben den Vorteil geringer Anpresskräfte.
- Bei schmalen Behältern, die quer transportiert werden, sind ein um 15° geneigtes elastisches Profil oder beschichtete Zahnriemen geeigneter, da Schlaufen kippen können, so dass der Behälter sich verdreht.

Das Transportband sollte die Behälter vor allem Tragen, aber über eine geringe Reibung verzügen. So wird das Positionieren und Klemmen der Behälter zwischen den seitlichen Führungselementen möglichst wenig gestört.

Weiterhin ist zu bemerken, dass die Seitenführungen auch partiell eingesetzt werden können. Meist sind die Behälter durch das Produktgewicht ausreichend fixiert, sobald einige Produkte eingelegt sind.

Mittels Abstreifer, Bürsten oder, falls erforderlich, einer "Waschstation" im Umlauf können die Führungselemente gereinigt werden, so dass die Funktion durch ein allmähliches Verschmutzen nicht beeinträchtigt wird.

Die sich mit der erfindungsgemässen Vorrichtung u. a. ergebenden Vorteile sind
- Sicherer Transport der Behälter ohne Verschieben
- Daher keine Kamerasysteme zur Erfassung der Behälterposition vor jedem Verpackungsschritt notwendig
- Keine Relativbewegung - keine Dekorbeschädigung
- Gute Hygiene, gut zu reinigen
- Einfache Umstellung auf unterschiedlichste Behältergrössen und Formen
- Auch unregelmässig geformte Behälter sind ohne zusätzliche Trägerelemente möglich
- Bisher für Kartons mit angehängtem Deckel und hohe Behälter sehr aufwändiges Transportsystem erforderlich
- Einsatz auch bei schräggestelltem Behältertransport möglich
- Einfacher, kostengünstiger Aufbau

### KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: eine Schrägsicht auf eine Transportvorrichtung für Behälter;
- Fig. 2: die Draufsicht auf eine Transportvorrichtung mit seitlich eingeklemmten Behältern;
- Fig. 3: eine Schrägsicht auf eine Transportvorrichtung mit seitlich eingeklemmtem Behälter;
- Fig. 4 - 6: an verschiedene Behälterformen angepasste Klemmelemente im Querschnitt;
- Fig. 7: die Wirkungsweise eines Klemmelementes;
- Fig. 8: eine weitere Anordnung eines Klemmelementes im Querschnitt;
- Fig. 9: einen Querschnitt durch einen Zahnriemen mit an diesem befestigter Lippe;
- Fig. 10: die schräggestellte Anordnung von Fig. 9;
- Fig. 11: eine Schrägsicht auf ein Endlosband mit schlaufenförmigen Klemmelementten;
- Fig. 12: die Draufsicht auf eine Einlaufstrecke einer Transportvorrichtung.

### BESCHREIBUNG BEVORZUGTER AUSFÜHRUNGSFORMEN

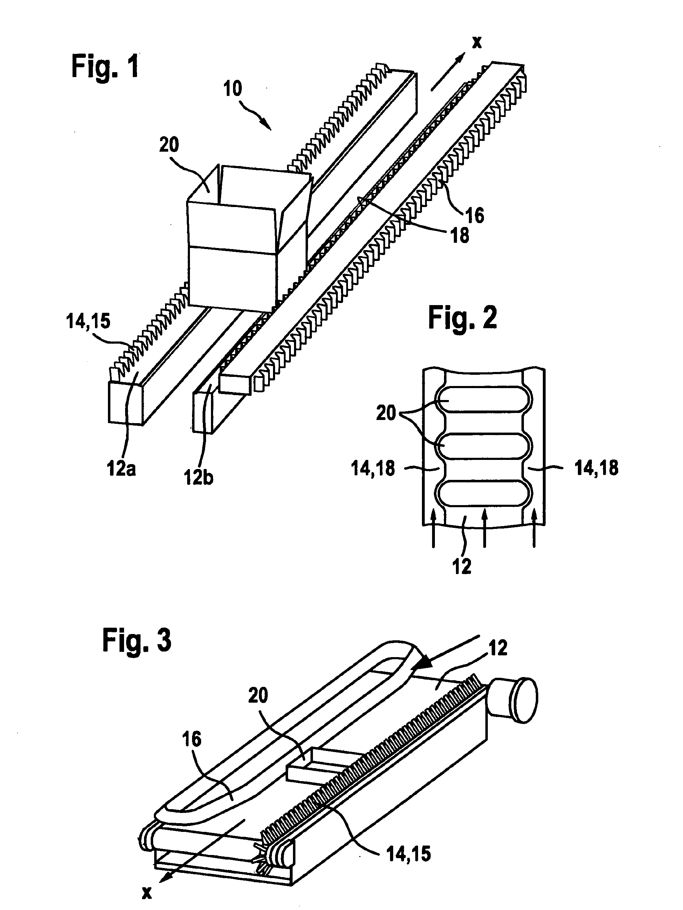

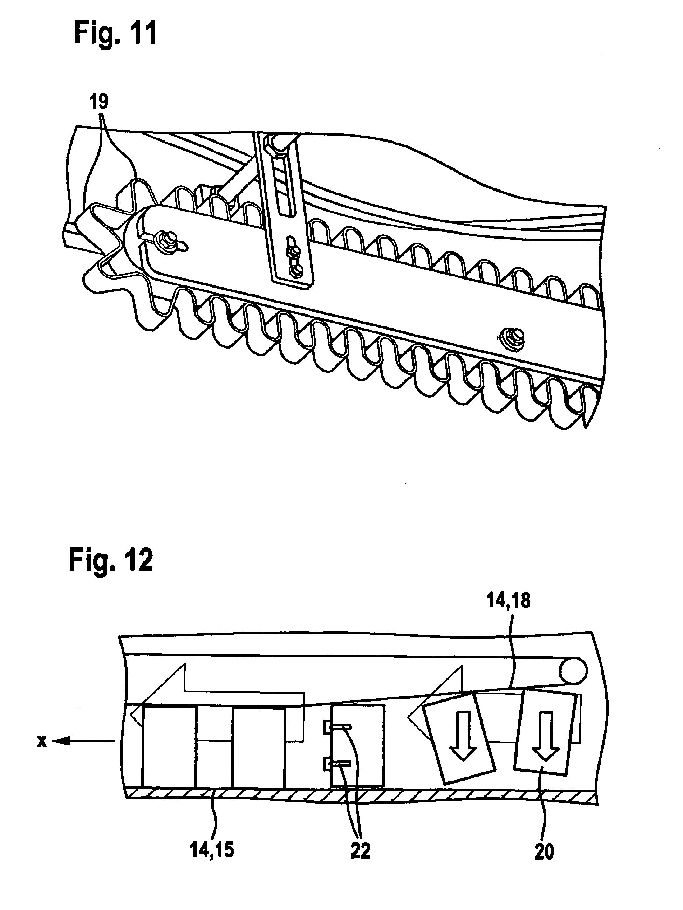

Eine in Fig. 1 gezeigte Transportvorrichtung 10 umfasst eine in einer Transportrichtung x bewegbare, bandförmige Behälterauflage 12 und auf jeder Seite der Behälterauflage 12 angeordnete, seitliche Transportführungen 14, 16. Die Behälterauflage 12 umfasst im gezeigten Beispiel zwei parallel zueinander angeordnete und synchron mit gleicher Geschwindigkeit laufende Transportbänder 12a, 12b. Eine erste seitliche Transporführung 14 besteht hier aus einer Vielzahl von starr mit einem der Transportbänder 12a verbundenen Nocken 15 als Anschlagelemente für auf der Behälterauflage 12 bzw. den Transportbändem 12a, 12b aufliegende, im gezeigten Beispiel als Schachteln ausgebildete Behälter 20. Die zweite seitliche Transportführung 16 ist als umlaufendes Band mit Klemmelementen in Form von elastischen Schlaufen 19 ausgebildet (Fig.11). Für einen sicheren Transport wird das Schlaufenstollenprofil so gewählt, dass mindestens drei Schlaufen 19 den Behälter 20 klemmen.

Bei der in Fig. 1 gezeigten Anordnung werden beim Klemmen der Behälter 20 zwischen den starren Nocken 15 an der ersten seitlichen Transportführung 14 und den elastischen Schlaufen 19 nur die Schlaufen 19 elastisch verformt. Die erste seitliche Transportführung 14 mit den Nocken 15 dient als gerade Anschlagfläche und ermöglicht damit eine genaue Positionsbestimmung der Behälter 20.

Bei der in Fig. 2 gezeigten Anordnung sind beide seitlichen Transportführungen 14, 16 elastisch bzw. mit elastischen Klemmelementen 18 ausgestattet. Die Behälter 20 werden hier auf beiden Seiten zwischen elastisch verformten Klemmelementen 18 gehalten.

Fig. 3 zeigt eine Anordnung mit einem einzigen Transportband als Behälterauflage 12. Der Behälter 20 ist hier ein schalenförmiger Tray, wie er beispielsweise zum Verpacken von Biskuits verwendet wird. Wie bei der in Fig. 1 gezeigten Anordnung besteht auch hier eine erste seitliche Transportführung 14 aus einer Vielzahl von starr mit dem Transportband verbundenen Nocken 15 als Anschlagelemente für die Behälter 20. Die zweite seitliche Transportführung 16 ist ein umlaufendes Band mit nicht näher ausgeführten Klemmelementen.

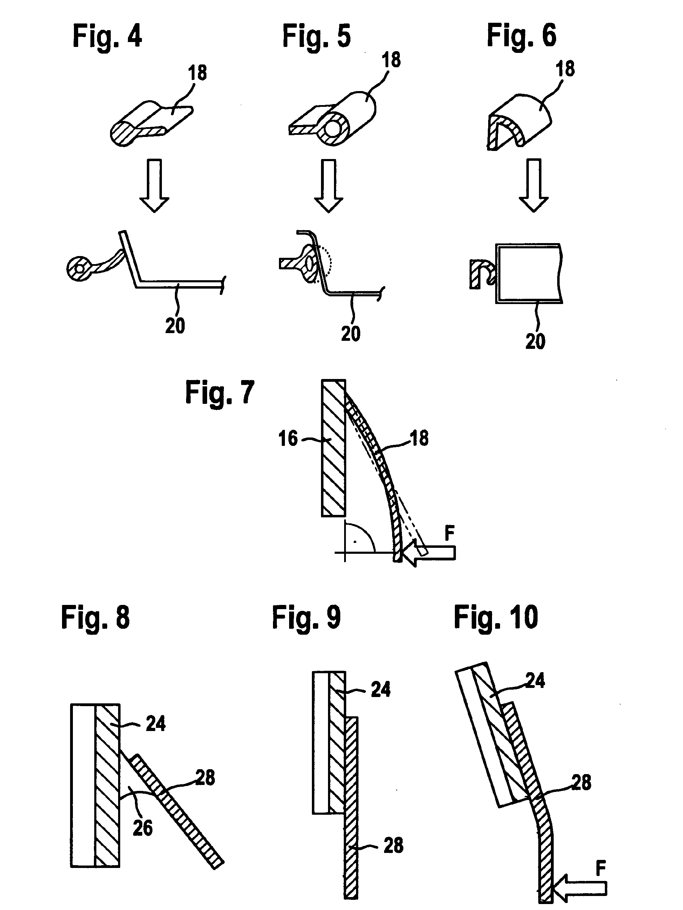

In den Fig. 4 - 6 sind verschiedene Ausführungen von Klemmelementen 18a, 18b 18c dargestellt. Diese sind im wesentlichen so ausgeführt, dass sie neben einer parallel zur Behälterauflage 12 gerichteten Klemmwirkung die Behälter 20 gegen die Behälterauflage 12 drücken und damit die für einen sicheren Transport der leichten, leeren Behälter erforderliche Haftreibung zwischen Behälter 20 und Behälterauflage 12 sicherstellen.

Ein Für dünnwandige, leichte Behälter 20 geeignetes Klemmelement 18 ist in den Fig. 7 und 8 dargestellt. Das Klemmelement 18 besteht aus einem Zahnriemen 24 als Grundelement mit einem keilförmigen Profil 26, auf dem ein Gurtband 28 als federnde Lippe befestigt ist.

In Fig. 9 ist eine alternative Ausführungsform dargestellt. Die Lippe 28 ist hier direkt auf den Zahnriemen aufgebracht. Eine eventuell erforderliche Schrägstellung der Lippe 28 kann z.B. durch eine Verdrehung des Zahnriemens 24 beim Transport erfolgen (Fig. 10).

Insbesondere rechteckige Behälter werden zunächst von einem in der Zeichnung nicht dargestellten Abstapler auf das Transportband übergeben. Hierbei lassen die Abstapler die Behälter unkontrolliert auf das Transportband fallen. Beim Einlaufen in die Transportstrecke und insbesondere zwischen die seitlichen Klemmeinrichtungen müssen die Behälter ausgerichtet werden. Andernfalls würden die Behälter schräg bzw. verdreht eingeklemmt.

Wie in Fig. 12 dargestellt, ist zum Ausrichten der Behälter 20 eine der seitlichen Transportführungen 14, 16 -- hier die zweite Transportführung 16 mit den elastischen Klemmelementen 18 - entlang einer Einlaufstrecke zunächst schräg angeordnet, so dass die Behälter 20 in Richtung der ersten seitlichen Transportführung 14 mit den starren Anschlagelementen geschoben werden. Zusätzlich kann dies durch ein System von einschwenkenden Stoppern 22, welche auch gleichzeitig einen definierten Abstand zwischen den Behältern 20 herstellen, unterstützt werden.

Unregelmässige Behälter, welche keine definierte Vorzugsrichtung besitzen, können auch mit grosser Toleranz in der Lage übernommen werden und werden auch so weiter transportiert. Ein Kamerasystem am Anfang der Transportstrecke erfasst die Orientierung, in der der Behälter transportiert wird. Durch die Klemmung verändert sich diese während des Transportes nicht.

### BEZUGSZEICHENLISTE

- 10: Transportvorrichtung
- 12, 12a,b: Behälterauflage, Transportbänder
- 14: erste seitliche Transportführung
- 15: Nocken an 14
- 16: zweite seitliche Transportführung
- 18: Klemmelemente
- 19: Schlaufenstollen
- 20: Behälter
- 22: Stopper
- 24: Zahnriemen
- 26: Keilprofil
- 28: Gurtband, Lippe

- x: Transportrichtung

## Patentansprüche

1. Vorrichtung zum Transportieren von Behältern (20), mit einer in einer Transportrichtung (x) bewegbaren Behälterauflage (12), wobei der Behälterauflage (12) eine erste und eine zweite seitliche Transportführung (14, 16) zur beidseitigen Führung der Behälter (20) zugeordnet sind und wenigstens eine der Transportführungen (14, 16) mit gleicher Geschwindigkeit wie die Behälterauflage (12) in Transportrichtung (x) bewegbar ist und die Transportführungen (14, 16) Klemmelemente (18) zum Fixieren der Behälter (20) zwischen der ersten und der zweiten Transportführung (14, 16) aufweisen, **dadurch gekennzeichnet, dass** eine der seitlichen Transportführungen (14, 16) mit der bandförmigen Behälterauflage (12) verbunden ist.

2. Vorrichtung nach Anspruch 1, **dadurch gekennzeichnet, dass** die Behälterauflage (12) ein in einer Transportebene umlaufender Förderer ist.

3. Vorrichtung nach Anspruch 2, **dadurch gekennzeichnet, dass** die Klemmelemente (18) zur Einleitung einer Klemmkraft in einer zur Transportebene im Wesentlichen parallelen Klemmebene ausgestaltet sind.

4. Vorrichtung nach Anspruch 2, **dadurch gekennzeichnet, dass** wenigstens eine der Transportführungen (14, 16) zum Andrücken der Behälter (20) gegen die Behälterauflage (12) gegenüber der Transportebene geneigt angeordnet ist.

5. Vorrichtung nach einem der Ansprüche 1 bis 4, **dadurch gekennzeichnet, dass** die den seitlichen Transportführungen (14, 16) zugeordneten Klemmelemente (18) einander gegenüberstehen.

6. Vorrichtung nach einem der Ansprüche 1 bis 5, **dadurch gekennzeichnet, dass** die Klemmelemente (18) als seitliche Führungselemente ausgebildet sind.

7. Vorrichtung nach Anspruch 1, **dadurch gekennzeichnet, dass** die Klemmelemente (18) der seitlichen Transportführung (14, 16) in der Form von Nocken (15) starr mit der bandförmigen Behälterauflage (12) verbunden sind.

8. Vorrichtung nach Anspruch 1, **dadurch gekennzeichnet, dass** wenigstens eine der seitlichen Transportführungen (14, 16) einzeln antreibbar ist.

9. Vorrichtung nach einem der Ansprüche 1 bis 8, **dadurch gekennzeichnet, dass** wenigstens eine der seitlichen Transportführungen (14, 16) mit flexiblen, elastischen Klemmelementen (18) ausgestattet ist.

10. Vorrichtung nach Anspruch 9, **dadurch gekennzeichnet, dass** die mit elastischen Klemmelementen (18) ausgestattete, seitliche Transportführung (16) quer zur Transportrichtung (x) seitlich verschiebbar ist.

11. Vorrichtung nach Anspruch 9, **dadurch gekennzeichnet, dass** die mit elastischen Klemmelementen (18) ausgestattete, seitliche Transportführung (16) als Schlaufenband ausgeführt ist.

12. Vorrichtung nach Anspruch 9, **dadurch gekennzeichnet, dass** die elastischen Klemmelemente (18) als Lippen ausgeführt sind.

13. Vorrichtung nach einem der Ansprüche 1 bis 12, **dadurch gekennzeichnet, dass** wenigstens eine der Transportführungen (14, 16) zum Ausrichten der Behälter (20) auf einer Einlaufstrecke in spitzem Winkel zur anderen Transportführung verläuft.

14. Vorrichtung nach Anspruch 13, **dadurch gekennzeichnet, dass** am Ende der Einlaufstrecke wenigstens ein in die Transportebene einschwenkbarer Stopper (22) als Anschlag für die Behälter (20) vorgesehen ist.

## Claims

1. Apparatus for conveying containers (20), having a container support (12) which is movable in a conveying direction (x), wherein a first and a second lateral conveying guide (14, 16) for the bilateral guidance of the containers (20) are assigned to the container support (12), and at least one of the conveying guides (14, 16) is movable in the conveying direction (x) at the same speed as the container support (12), and the conveying guides (14, 16) have clamping elements (18) for fixing the containers (20) between the first and the second conveying guides (14, 16),
**characterized in that**
one of the lateral conveying guides (14, 16) is connected to the belt-like container support (12).

2. Apparatus according to Claim 1, **characterized in that** the container support (12) is a conveyor which circulates in a conveying plane.

3. Apparatus according to Claim 2, **characterized in that** the clamping elements (18) are configured for introducing a clamping force in a clamping plane that is substantially parallel to the conveying plane.

4. Apparatus according to Claim 2, **characterized in that** at least one of the conveying guides (14, 16), for pressing the containers (20) against the container support (12), is inclined in relation to the conveying plane.

5. Apparatus according to one of Claims 1 to 4, **characterized in that** the clamping elements (18), which are assigned to the lateral conveying guides (14, 16), are located opposite one another.

6. Apparatus according to one of Claims 1 to 5, **characterized in that** the clamping elements (18) are configured as lateral guiding elements.

7. Apparatus according to Claim 1, **characterized in that** the clamping elements (18) (15) of the lateral conveying guide (14, 16) in the form of lobes (15) are rigidly connected to the belt-like container support (12).

8. Apparatus according to Claim 1, **characterized in that** at least one of the lateral conveying guides (14, 16) can be driven on its own.

9. Apparatus according to one of Claims 1 to 8, **characterized in that** at least one of the lateral conveying guides (14, 16) is equipped with flexible, elastic clamping elements (18).

10. Apparatus according to Claim 9, **characterized in that** the lateral conveying guide (16), which is equipped with elastic clamping elements (18), is laterally displaceable transversely to the conveying direction (x).

11. Apparatus according to Claim 9, **characterized in that** the lateral conveying guide (16), which is equipped with elastic clamping elements (18), is configured as a loop strap.

12. Apparatus according to Claim 9, **characterized in that** the elastic clamping elements (18) are configured as lips.

13. Apparatus according to one of Claims 1 to 12, **characterized in that** at least one of the conveying guides (14, 16), for aligning the containers (20) on an entry track, extends at an acute angle in relation to the other conveying guide.

14. Apparatus according to Claim 13, **characterized in that** at the end of the entry track at least one stopper (22), which is pivotable into the conveying plane, is provided as a stop for the containers (20).

## Revendications

1. Dispositif pour transporter des récipients (20), comprenant un support de récipient (12) déplaçable dans une direction de transport (x),
le support de récipient (12) étant associé à un premier et un deuxième guide de transport latéral (14, 16) pour le guidage bilatéral des récipients (20) et au moins l'un des guides de transport (14, 16) pouvant être déplacé à la même vitesse que le support de récipient (12) dans la direction de transport (x) et les guides de transport (14, 16) présentant des éléments de serrage (18) pour fixer les récipients (20) entre le premier et le deuxième guide de transport (14, 16), **caractérisé en ce que** l'un des guides de transports latéraux (14, 16) est connecté au support de récipient en forme de bande (12).

2. Dispositif selon la revendication 1, **caractérisé en ce que** le support de récipient (12) est un convoyeur circulant dans un plan de transport.

3. Dispositif selon la revendication 2, **caractérisé en ce que** les éléments de serrage (18) sont configurés pour introduire une force de serrage dans un plan de serrage sensiblement parallèle au plan de transport.

4. Dispositif selon la revendication 2, **caractérisé en ce qu'**au moins l'un des guides de transport (14, 16) est disposé de manière inclinée par rapport au plan de transport afin de presser les récipients (20) contre le support de récipient (12).

5. Dispositif selon l'une quelconque des revendications 1 à 4, **caractérisé en ce que** les éléments de serrage (18) associés aux guides de transport latéraux (14, 16) sont en regard l'un de l'autre.

6. Dispositif selon l'une quelconque des revendications 1 à 5, **caractérisé en ce que** les éléments de serrage (18) sont réalisés sous forme d'éléments de guidage latéraux.

7. Dispositif selon la revendication 1, **caractérisé en ce que** les éléments de serrage (18) du guide de transport latéral (14, 16) sont connectés rigidement au support de récipient en forme de bande (12) sous forme de cames (15).

8. Dispositif selon la revendication 1, **caractérisé en ce qu'**au moins l'un des guides de transport latéraux (14, 16) peut être entraîné individuellement.

9. Dispositif selon l'une quelconque des revendications 1 à 8, **caractérisé en ce qu'**au moins l'un des guides de transport latéraux (14, 16) est configuré avec des éléments de serrage flexibles élastiques (18).

10. Dispositif selon la revendication 9, **caractérisé en ce que** le guide de transport latéral (16) muni d'éléments de serrage élastiques (18) peut être déplacé latéralement transversalement à la direction de transport (x).

11. Dispositif selon la revendication 9, **caractérisé en ce que** le guide de transport latéral (16) muni d'éléments de serrage élastiques (18) est réalisé sous forme de bande sans fin.

12. Dispositif selon la revendication 9, **caractérisé en ce que** les éléments de serrage élastiques (18) sont réalisés sous forme de lèvres.

13. Dispositif selon l'une quelconque des revendications 1 à 12, **caractérisé en ce qu'**au moins l'un des guides de transport (14, 16) s'étend à angle aigu par rapport à l'autre guide de transport pour orienter les récipients (20) vers une section d'entrée.

14. Dispositif selon la revendication 13, **caractérisé en ce qu'**à l'extrémité de la section d'entrée est prévu au moins un arrêt (22) pouvant pivoter dans le plan de transport et servant de butée pour les récipients (20).
